# FASCICULE DE BREVET EUROPEEN

(11) **EP 1 427 737 B1**
(45) Date de publication et mention de la délivrance du brevet: **22.08.2007**
(21) Numéro de dépôt: 02777413.2
(22) Date de dépôt: 10.09.2002
(51) Int. Cl.: C07F 7/18

(54) **PROCEDE D'OBTENTION DE MONOORGANOXYSILANES HALOGENES UTILISABLES NOTAMMENT EN TANT QU'INTERMEDIAIRES DE SYNTHESE**
HERSTELLUNG VON HALOGENIERTEN MONOORGANOXYSILANEN, VERWENDUNG ALS ZWISCHENVERBINDUNGEN
METHOD FOR OBTAINING HALOGENATED MONOORGANOXYSILANES USEFUL IN PARTICULAR AS SYNTHESIS INTERMEDIATES

(30) Priorité: 21.09.2001 FR 0112191; 20.12.2001 FR 0116508
(43) Date de publication de la demande: 16.06.2004
(60) Demande divisionnaire: 05026551.1
(73) Titulaire: RHODIA CHIMIE, 92512 Boulogne Billancourt Cedex (FR)
(72) Inventeur: GUENNOUNI, Nathalie, La Clairière, 69540 Irigny (FR); MIGNANI, Gérard, F-69008 Lyon (FR); PEVERE, Virginie, 69008 Lyon (FR)
(74) Mandataire: Delenne, Marc
(86) Numéro de dépôt international: PCT/FR2002/003067
(87) Numéro de publication internationale: WO 2003/027125

(56) Documents cités:
- EP-A- 0 471 164
- EP-A- 0 680 997
- WO-A-02/30939
- WO-A-02/31041
- WO-A-98/52954
- DE-A- 2 648 241
- DE-B- 2 749 316
- US-A- 4 401 826
- US-A- 4 507 490
- US-A- 5 117 027
- US-B1- 6 242 627
- CHEMICAL ABSTRACTS, vol. 63, no. 54759, Columbus, Ohio, US; BELYA-KOVA, Z.V. ET AL.: "Reaction of hydrosilanes with allylchloride"

## Description

La présente invention concerne de nouvelles voies de synthèse de monoorganoxysilanes halogénés, utilisables comme intermédiaire de synthèse en chimie organique, pour la production de monoorganoxysilanes fonctionnalisés par des groupes autres qu'halogène.

Les intermédiaires de synthèse en chimie organique dont il est question dans le cadre de l'invention sont particulièrement utiles dans la préparation de monoorganoxysilanes fonctionnalisés par exemple par des groupes aminés, thiolés ou polysulfurés.

A la connaissance de la Demanderesse, l'art antérieur ne propose pas de protocole opératoire permettant d'accéder à des monoorganoxysilanes halogénés, de manière simple et industrielle, en partant d'une part des halogénoorganosilanes (par exemple: Me₂SiCl₂ où Me = CH_{3;} Cl₃SiH) qui sont des grands intermédiaires de la synthèse directe des silicones (synthèse de Rochow-Müller à partir de Si et de MeCl), et d'autre part de classiques réactifs de Grignard comme par exemple un organomagnésien chloré. Ce sont là les matières premières commercialement disponibles et les principaux avantages de pareil procédé se situent au niveau des prix et de l'accessibilité industrielle des produits mis en oeuvre et en particulier des produits de départ.

Comme art antérieur à retenir, on citera en particulier le document brevet EP-A-0 680 977 où l'on décrit l'emploi comme intermédiaire de synthèse de silanes halogénés de formule R¹R²R³-CH₂-Hal dans laquelle au moins un des symboles R¹, R² ou R³ représente un radical alkoxy; ce document ne donne pas de détail sur la préparation de cet intermédiaire de synthèse, mais il y a lieu de penser qu'il est obtenu de manière connue par chloration de l'alkylsilane à rotule méthylène correspondant.

Le résumé CA nº 63:54759 mentionne une réaction d'hydrosilanes avec un chlorure d'allyle en présence de H₂PtCl₆.

L'un des objectifs essentiels de la présente invention est de fournir un perfectionnement à la synthèse de monoorganoxysilanes halogénés, en particulier utiles comme intermédiaires de synthèse en chimie organique.

Un autre objectif essentiel de l'invention est de fournir un procédé de préparation de monoorganoxysilanes halogénés, qui soit simple, industriel, et peu coûteux.

Un autre objectif essentiel de l'invention est de fournir un procédé de préparation de monoorganoxysilanes halogénés aptes à réagir avec un agent nucléophile pour produire des monoorganoxysilanes fonctionnalisés, par exemple des groupes aminés, thiolés ou polysulfurés.

Un autre objectif essentiel de l'invention est de fournir un procédé de préparation de monoorganoxysilanes halogénés, procurant un haut rendement, une haute sélectivité et une bonne productivité.

Un autre objectif essentiel de l'invention est de fournir un procédé de préparation de monoorganoxysilanes halogénés, dans lequel les réactifs consommables sont des produits commerciaux disponibles à grande échelle.

Ces objectifs, parmi d'autres, sont atteints par la présente invention qui concerne en premier lieu, un procédé de préparation de monoorganoxysilanes halogénés, de formule : 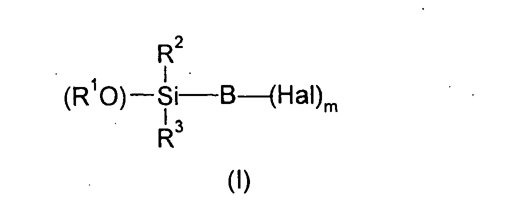 dans laquelle:
- le symbole R¹ représente un groupe hydrocarboné monovalent choisi parmi un radical alkyle, linéaire ou ramifié, ayant de 1 à 4 atomes de carbone et un radical alkoxyalkyle, linéaire ou ramifié, ayant de 2 à 8 atomes de carbone;
- les symboles R² et R³, identiques ou différents, représentent chacun un groupe un radical alkyle linéaire ou ramifié, ayant de 1 à 6 atomes de carbone, un radical aryle ayant de 6 à 18 atomes de carbone; un radical arylalkyle ou un radical alkylaryle (aryle en C₆-C₁₈ ; alkyle en C₁-C₆);
- m = 1 ou 2;
- le symbole Hal représente un atome d'halogène choisi parmi les atomes de chlore, brome et iode ;
- B:
   ◆ quand m= 1 : reste divalent de formule :

      -B¹-CR⁴H-CR⁵R⁶-;

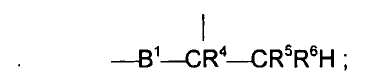

      -(B²)ₐ-CR⁷R⁸-CR⁹R¹⁰-CR¹¹R¹²R¹³;

      avec :
      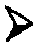 la condition selon laquelle un des radicaux R⁷R⁸R⁹R¹⁰R¹¹R¹²R¹³ correspondant à un lien valenciel ;
      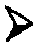 B¹ = reste alkylène, linéaire ou ramifié, en C₁-C₁₀ ; reste aromatique divalent choisi parmi :
         □ -phénylène(ortho, méta ou para)-alkylène(linéaire ou ramifié en C₂-C₆)-,
         □ -alkylène(linéaire ou ramifié en C₂-C₆)-phénylène(ortho, méta ou para)-, et
         □ -alkylène(linéaire ou ramifié en C₂-C₆)-phénylène(ortho, méta ou para)-alkylène(linéaire ou ramifié en C₂-C₆)-
      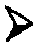 B² = reste alkylène, linéaire ou ramifié, en C₁-C₁₀ ; reste aromatique divalent choisi parmi :
         □ -phénylène(ortho, méta ou para)-alkylène(linéaire ou ramifié en C₂-C₆)-,
         □ -alkylène(linéaire ou ramifié en C₂-C₆)-Phénylène(ortho, méta ou para)-, et
         □ -alkylène(linéaire ou ramifié en C₂-C₆)-phénylène(ortho, méta ou para)-alkylène(linéaire ou ramifié en C₂-C₆)-
      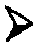 a=0 ou 1;
      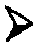 R⁴ à R¹³, identiques ou différents, représentant chacun l'hydrogène, un groupe un radical alkyle linéaire ou ramifié, ayant de 1 à 3 atomes de carbone,
   ◆ quand m= 2 : reste trivalent de formule : 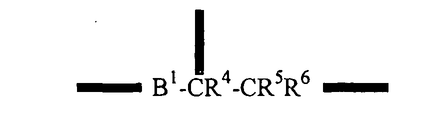 avec B¹, R⁴, R⁵, R⁶ tels que définis ci-dessus ;
caractérisé en ce qu'il comprend les étapes suivantes -a-, -b- et -c- :

### - Etape -a-

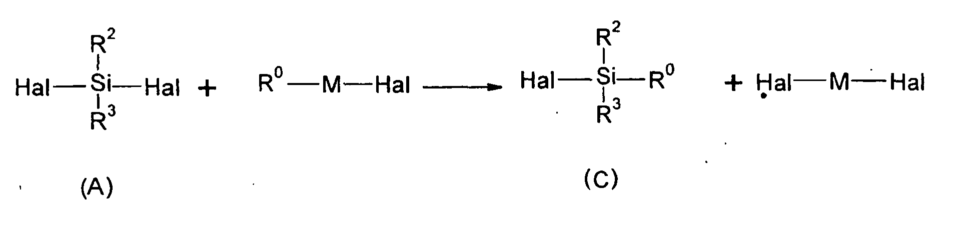

avec :
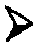 R° représentant indépendamment :
   - R⁰¹ correspondant à : CR⁵R⁶=CR⁴-B¹-;
   - R⁰² correspondant à : CR¹¹R¹²R¹³-CR⁹R¹⁰-CR⁷R⁸-(B²)ₐ-; avec au moins un des radicaux R⁷ à R¹³ représentant l'hydrogène ;
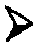 le symbole M représentant un métal alcalino-terreux;

### - Etape -b-

quand R⁰ = R⁰¹:
   O soit : 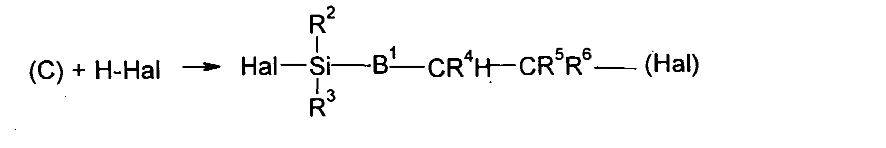 et/ou 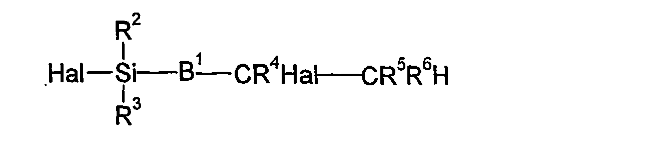 les produits ainsi obtenus, quand ils sont en mélange, pouvant être introduits dans l'étape -c-, soit en mélange, soit isolément après séparation ;
   O soit : 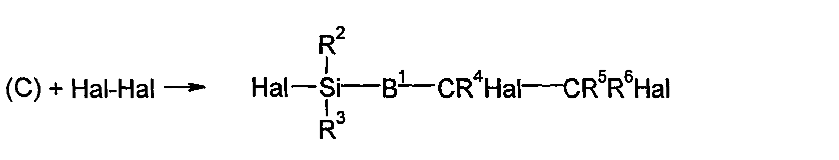
quand R⁰ = R⁰² 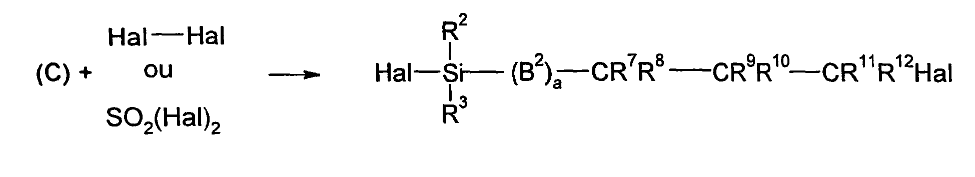 et/ou 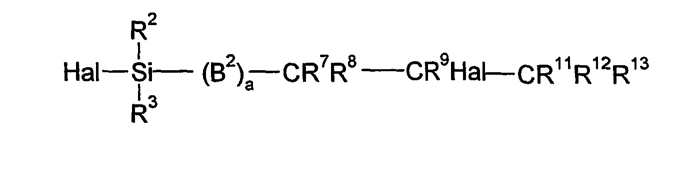 et/ou 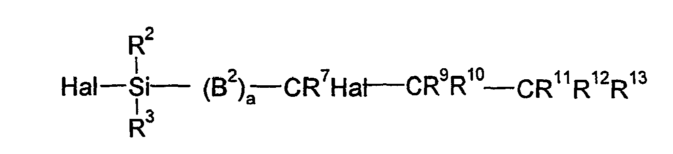 (dans le cas où R¹³ et/ou R¹⁰ et/ou R⁸ = H)
les produits ainsi obtenus, quand ils sont en mélange, pouvant être introduits dans l'étape 5 -c-, soit en mélange, soit isolément après séparation ;

### - Etape -c-

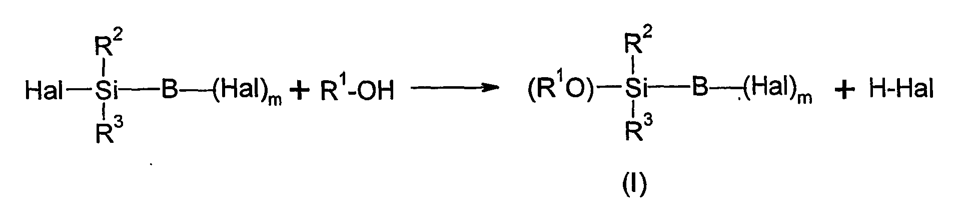

Conformément à l'invention, le symbole Hal désigne de préférence le chlore.

Le procédé selon l'invention permet d'accéder à des monoorganoxysilanes halogénés, de manière simple et industrielle en partant d' halogénoorganosilanes (par exemple Me₂SiCl₂ où Me = CH₃), qui sont des grands intermédiaires de la synthèse directe (synthèse de Rochow-Müller à partir de Si et de MeCl). Ce sont là les matières premières de la production industrielle de silicones. Les principaux avantages du procédé selon l'invention se situent au niveau des prix et de l'accessibilité industrielle des produits mis en oeuvre et en particulier des produits de départ.

Dans la formule (I) ci-dessus, les radicaux R¹ préférés sont choisis parmi les radicaux : méthyle, éthyle, n-propyle, isopropyle, n-butyle, CH₃OCH₂-, CH₃OCH₂CH₂- et CH₃OCH(CH₃)CH₂- ; de manière plus préférée, les radicaux R¹ sont choisis parmi les radicaux : méthyle, éthyle, n-propyle et isopropyle.

Les radicaux R² et R³ préférés sont choisis parmi les radicaux : méthyle, éthyle, n-propyle, isopropyle, n-butyle, n-hexyle et phényle ; de manière plus préférée, les radicaux R² et R³ sont des méthyles.

De manière préférée dans les monoorganoxysilanes halogénés répondant à la formule (1), le radical B peut représenter un alkylène qui répond aux formules suivantes :

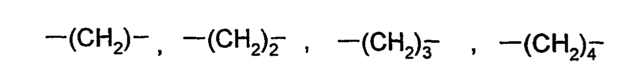

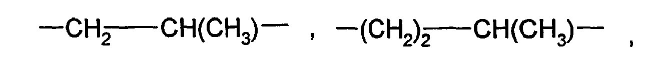

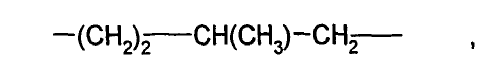

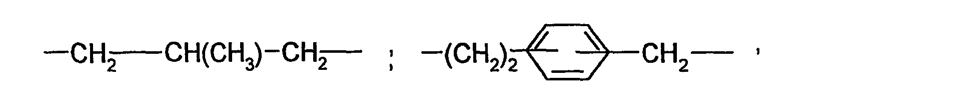

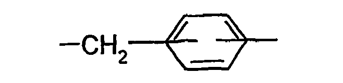

En résumé et à titre d'exemple, la variante R° = R⁰¹ peut être illustrée comme suit:

### Etape -a- :

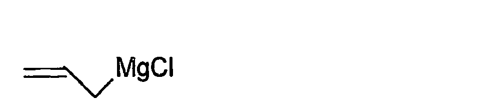

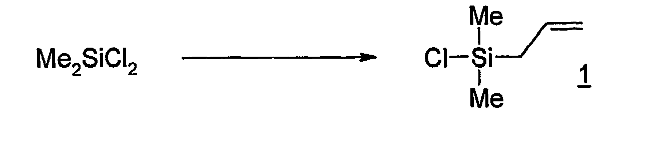

### Etape -b- :

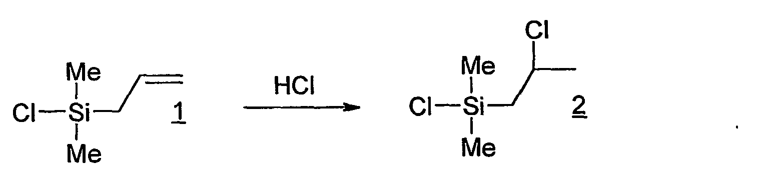

### Etape -c- :

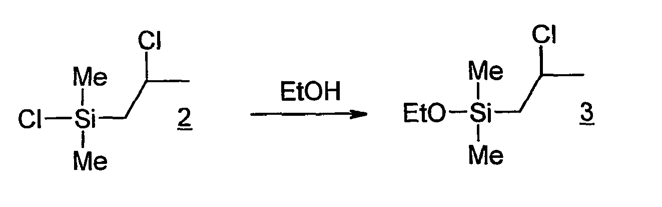

Dans l'exemple qui précède, le procédé selon l'invention consiste ici à faire réagir un chorure d'allylmagnésium sur Me₂SiCl₂. Le mode opératoire consiste donc à faire réagir des chloroalkylsilanes avec un réactif de Grignard approprié et ceci conformément aux modes opératoires décrits dans les deux publications suivantes :
- K.ANDRIANOV et Coll., Zhur Obsh. Khim, 8 (1938) 969
- M.VORONKOV et Coll ; idem 25 (1955) 1142

Ces synthèses sont réalisées en deux étapes :
1) Préparation de l'allyle ou méthallyle Grignard selon des procédés classiques (voir les modes opératoires décrits dans : *"*Grignard Reactions of Nonmetallic Substances, Kharasch & Reinmuth, Prentice-Hall, Inc, 1954*"*)*,*
2) Addition du Grignard sur les chlorométhylsilanes dans un solvant de type éther.

Les dérivés suivants sont déjà décrits dans la littérature :
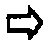 CIMe₂Si-CH₂-CH=CH₂: D.HURD et Coll. J.Am.Chem.Soc., 67 (1945) 1813,
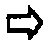 CIMe₂Si-CH₂-CMe=CH₂: H.HURD et Coll., Ind.Eng.Chem. 40 (1948) 2078.

Il est également possible de réaliser cette synthèse en une seule étape en mélangeant e.g.le magnésium , le chlorure d'allyle et le chlorométhylsilane à une température voisine de 5-20°C (US 5 629 439 du 13 mai 1997, DOW CORNING).

Egalement à titre exemplatif, on peut indiquer que l'action du réactif de Grignard issu du chlorure de crotyle permet dé conduire au silane suivant:

ClMe₂Si-CH₂-CH=CHMe

S'agissant de l'étape -b- dans cette variante R° = R⁰¹, le procédé consiste à faire réagir H-Hal, e.g.l'HCl, sur le silane insaturé (C) e.g. le silane dénommé 1 dans l'exemple de la variante R° = R⁰¹ résumée ci-dessus. Les conditions opératoires sont fournies par les travaux décrits dans la référence suivante : V.D.Sheludyakov et Coll. Zh.Obsh.Khim. (1985) 1202.

Ainsi dans le cadre d'un mode particulièrement préféré de mise en oeuvre du procédé selon l'invention, le protocole opératoire consiste à additionner e.g. HCl gaz sur l'allylsilane en présence d'un acide de Lewis e.g. de type FeCl₃ (II est également possible d'utiliser d'autres acides de Lewis tels : AlCl₃, ZnCl₂ ou leurs mélanges). Le rapport molaire catalyseur / silane varie entre 0,01 à 0,1, à une température comprise entre 30-70°C. Le silane est obtenu avec un rendement au moins égal à 85%. Le solvant utilisé pour cette réaction peut être le toluène (ou xylène ou chlorobenzène ou dichlorobenzène pur ou en mélange - il faut un solvant aprotique apolaire- il est également possible d'utiliser par exemple du CCl₄, dichloroéthane). Il est possible de travailler en masse. La vitesse d'introduction de l'HCl est de l'ordre de 3-6 litres /h. Le dérivé est isolé par une distillation sous pression réduite. Les sous produits de cette réaction sont principalement constitués par un dérivé (D), qui résulte de l'addition inverse d'HCl et dont la formule est donnée ci-après. 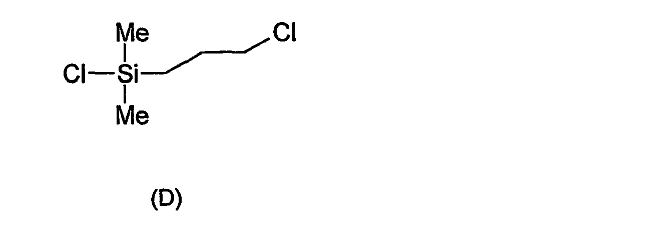 Ce dérivé est un précurseur du monoalcoxysilane halogéné (1) visé.

Il est possible d'accéder directement à (D) par action de HCl sur le silane (C) sous initiation UV. Il est possible de modifier le sens de l'addition de HCl sur une insaturation selon les conditions opératoires. Selon des processus thermiques l'addition se fait selon la règle de Markovnikov, c'est-à-dire que l'atome de chlore ira préférentiellement le carbone le plus riche en électrons. Si la réaction est réalisée sous UV cette règle n'est pas observée, on a principalement l'addition inverse.

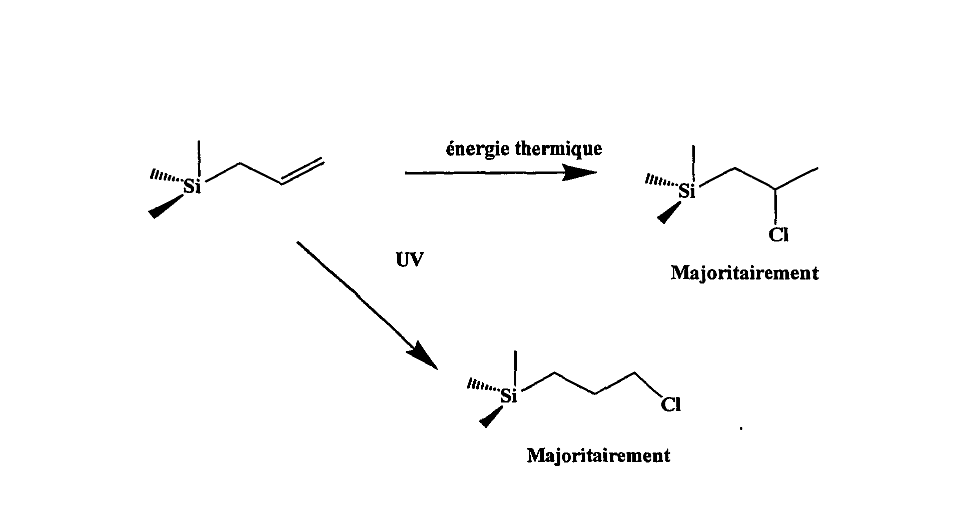

Pour plus de details, il est recommandé de se reporter à l'ouvrage : "March's Advanced Organic Chemistry". M.B.SMITH and J.MARCH. Fifth Edition. John Wiley & Sons, lnc. 2001 , page 985 et références citées.

De la même façon, il est possible d'additionner HBr et HI. Du point de vue industriel, il est avantageux d'utiliser HCl.

L'addition d'HCl, par exemple dans des conditions thermiques, sur un dérivé méthallylesilane conduit au silane (D):

CIMe₂Si-CH₂-CMe₂Cl

Dans la variante R° = R⁰², l'halogénation de la chaîne R⁰ par le groupement Hal est effectuée à l'aide d'(Hal)₂ et/ou SO₂(Hal)₂ (étape -b-).

En résumé et à titre d'exemple, cette variante R° = R⁰² peut être illustrée comme suit :

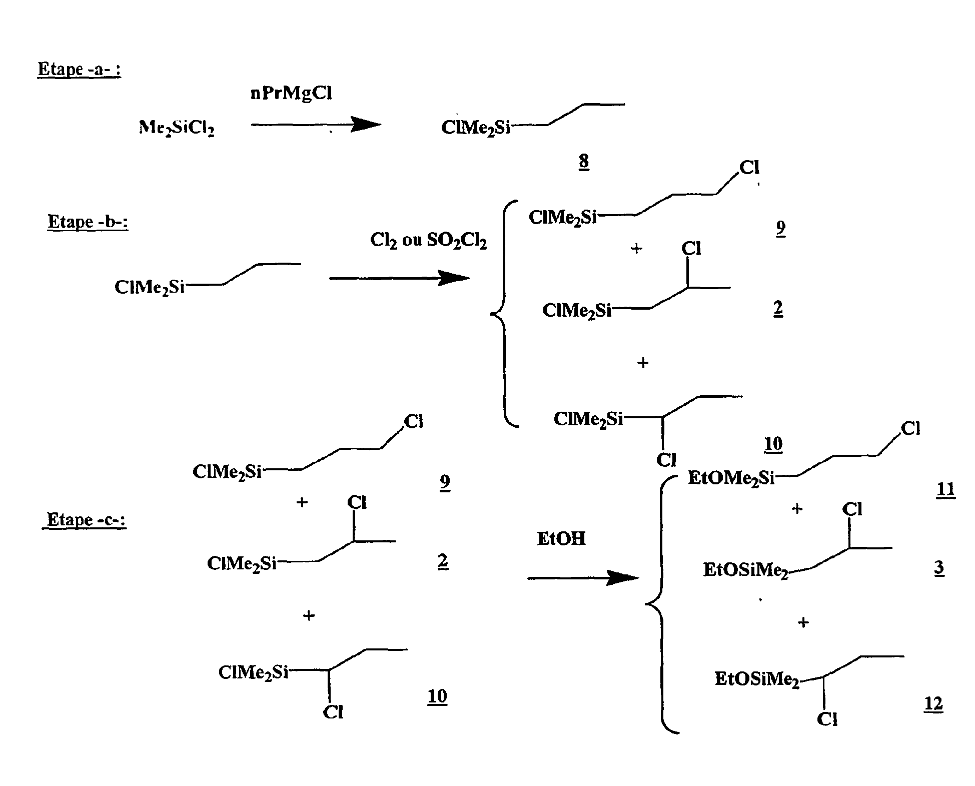

L'étape -a- consiste, en pratique, à faire réagir e.g. un organolithien ou un réactif de Grignard sur Me₂SiCl₂ dans un solvant aprotique polaire.

L'étape -b- de chloration est décrite dans la littérature. Par exemple : L.SOMMER et Coll., J.Am.Chem.Soc., 68 (1946) 488 et V.MIRONOV et Coll., lzv.Akakd.Nauk.SSSR., Otdel. Khim. Nauk., (1955) 182. On obtient en général un mélange des trois composés dans un rapport qui dépend de la nature de l'agent chlorant. Pour SO₂Cl₂, on observe les rapports suivants : ~5 / ~45 / ~50 entre 10/ 2 /9. L'utilisation du chlore permet de réduire très fortement le taux de dérivé 10. Les rendements isolés sont de l'ordre de 75-80%.

En pratique, dans ces variantes R° = R⁰¹ et R⁰ = R⁰², l'alcoxylation (étape -c-), avantageusement l'éthoxylation, intervient après la substitution par l'hydrure d'Hal (étape -b-). Elle est réalisée à l'aide d'au moins un alcool R¹OH (avec R¹ = alkyle en C₁-C₄, de préférence en C₂). En pratique, cette alcoxylation s'effectue de manière connue de l'homme de l'art, selon un processus d'alcoolyse tel que décrit par exemple dans le brevet DE 19 734 295 ou US 5 892 085.

On ne sort pas du cadre de la présente invention en réalisant les opérations (1), (2) et (3) suivantes :
■ opération (1) où, dans la conduite des étapes -a-, -b-, et -c-, on remplace les deux étapes -a- et -b- où m = 1, par l'étape unique -a'- ou -a"- suivante :
   - Etape -a'- : 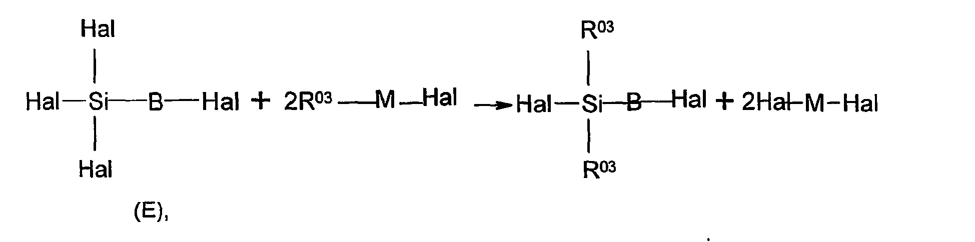
   - Etape -a" - 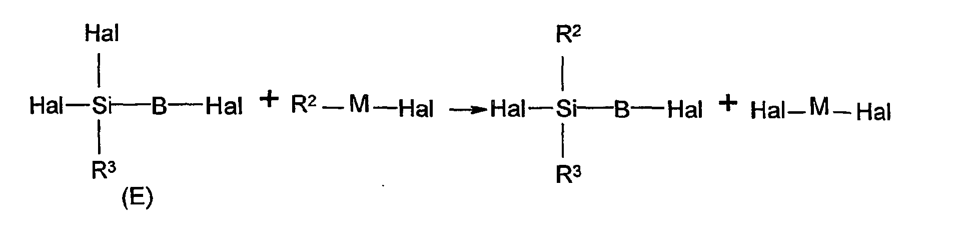
   où les symboles Hal, B et M sont tels que définis supra, le symbole R⁰³ correspond à R² et/ou R³ tels que définis également supra, et le composé de formule (E) est préparé en faisant réagir par exemple le trihalogénosilane (Hal)₃SiH sur le composé insaturé précurseur du groupement B-Hal, en particulier le composé CR⁵R⁶=CR⁴-B¹-Hal avec R⁵, R⁶ et B¹ ayant les définitions données également supra ;
■ opération (2) où, dans la conduite du procédé, on remplace les trois étapes -a-, -b-, et -c- où m = 1 par les trois étapes -a1-, -b1-, et -c1- suivantes :
   - Etape -a1- 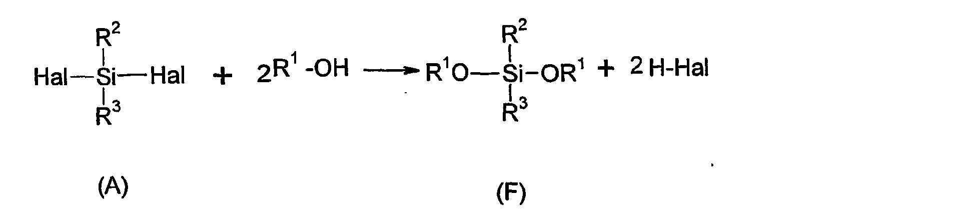 où les symboles Hal, R², R³ et R¹ sont tels que définis supra,
   - Etape-b1- 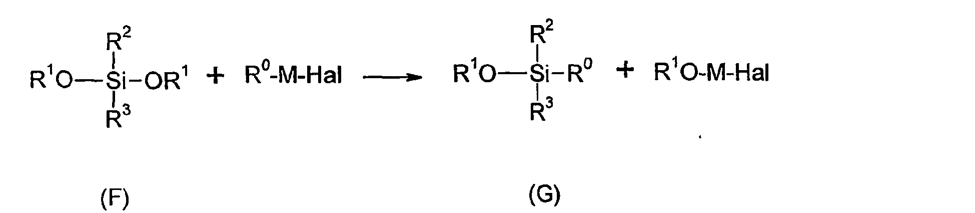 où les symboles R¹, R² R³, R° = R⁰¹ ou R⁰² M et Hal sont tels que définis supra,
   - Etape -c1- au cours de laquelle on procède soit à l'hydrohalogénation du groupement R⁰ = R⁰¹ de la formule (G), soit à l'halogénation du groupement R⁰ = R⁰² de la formule (G) pour conduire au groupement B-Hal, qui est effectuée à l'aide soit du réactif H-Hal, soit des réactifs Hal-Hal et/ou SO₂(Hal)₂ comme indiqué supra dans l'étape -b- ;
•■ opération (3) où, dans la conduite des étapes -a1-, -b1-, et -c1-, on remplace ces trois étapes où m = 1, par l'étape unique -a"'- suivante :
   - Etape -a"'- 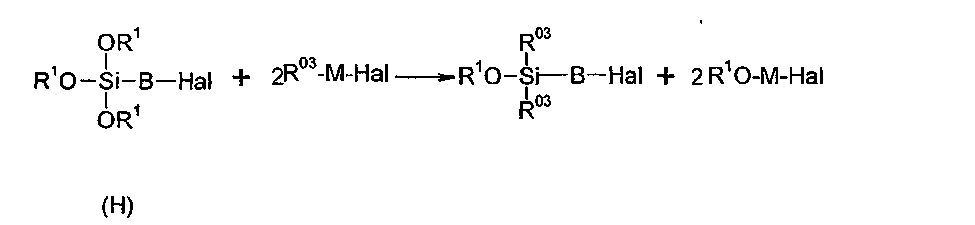 où les symboles R¹, B, Hal, R⁰³ et M sont tels que définis supra, et le composé de formule (H) est préparé par exemple (i) en faisant réagir le trihalogénosilane(Hal)₃SiH sur le composé insaturé précursuer du groupement B-Hal, en particulier le composé CR⁵R⁶=CR⁴-B¹-Hal tel que défini supra, pour former le composé (Hal)₃Si-B-Hal (J), puis (2i) en réalisant l'alkoxylation duu composé de formule (J) selon un processus classique d'alcoolyse à l'aide de l'alcool R¹-OH pour former le composé de formule (H).

Les étapes -b1- et -a"'- peuvent être conduites dans des conditions par exemples similaires à celles décrites dans le brevet japonais 2.178.293.

Conformément à l'invention, le produit (I) : 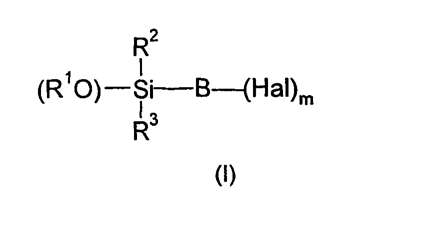 obtenu à l'issue de l'étape -c- ou -c1- ou -a"', est un intermédiaire de synthèse apte à réagir avec au moins un agent nucléophile, pour la production d'organosilanes fonctionnalisés de formule (II): 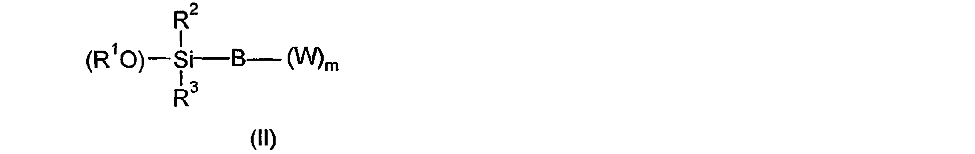 dans laquelle R¹, R², R³, B, m sont tels que définis supra et W est un groupe fonctionnel monovalent organique, de préférence choisi dans l'ensemble comprenant les radicaux :alcoxyle, acyle, amino substitué ou non, mercapto, cyano, thiocyanato, oxycyanato, (organosilyl)organopolythio et leurs mélanges.

L'agent nucléophile peut être un alcoxylate. Dans ce cas, lorsque m = 1, le schéma réactionnel est le suivant : 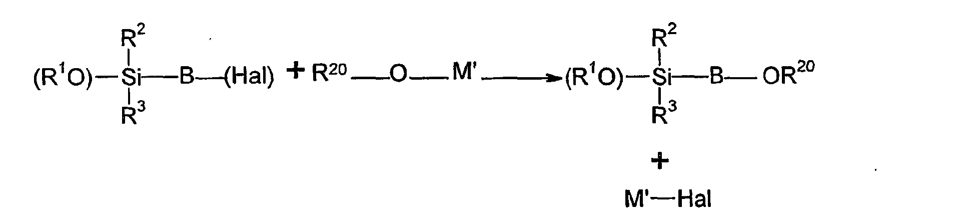
- avec M' choisi parmi les métaux alcalins,
- et avec R²⁰ répondant à la même définition que celle donnée ci-dessus pour R¹.

L'agent nucléophile peut être un sel d'acide carboxylique. Dans ce cas, lorsque m = 1, le schéma réactionnel est le suivant : 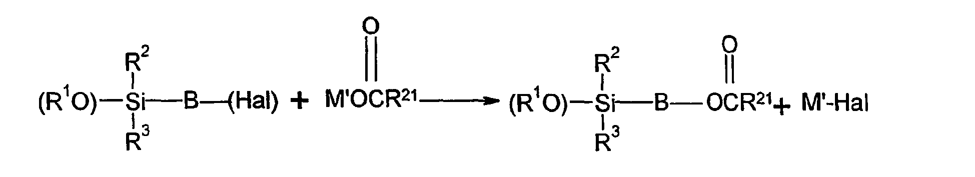
- avec M' choisi parmi les métaux alcalins,
- avecvec R²¹ répondant à la même définition que celle donnée ci-dessus pour R¹ et pouvant en plus correspondre à alkényle en C₂-C₁₀, éventuellement substitué par alkyle en C₁-C₃.

De préférence, l'acide considéré est l'acide (méth)acrylique. En d'autres termes : 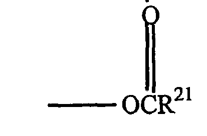 correspond à un radical (méth)acrylate .

L'agent nucléophile peut être une amine. Dans ce cas, lorsque m = 1, le schéma réactionnel est le suivant : 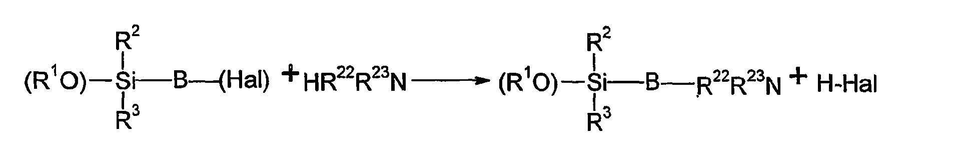 avec R²², R²³ répondant à la même définition que celle donnée dans la ci-dessus pour R¹.

A propos de cette réaction, on peut préciser que ce composé à fonction amine peut être obtenu par réaction de l'halogénosilane en présence d'ammoniac anhydre dans le cas particulier où R²² = R²³ = H, sous pression, par exemple dans des conditions similaires à celles décrites dans le brevet Dynamit Nobel DE-2 749 316 de 1977, à savoir : pression autogène en présence de NH₃ (30 équivalents) et réaction conduite pendant 12 heures à 100°C.

L'agent nucléophile peut être un dérivé soufré permettant d'accéder à un organosilane de formule (II) portant une fonction mercapto (ou thiol). Dans ce cas, lorsque m =1, le schéma réactionnel est le suivant :

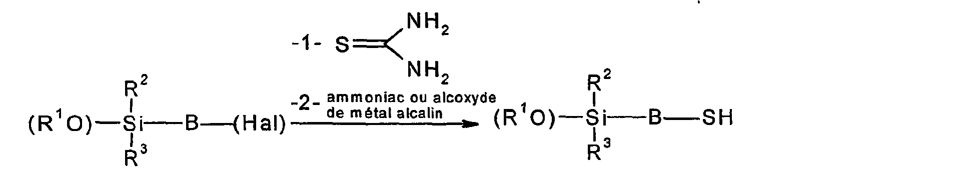

A propos de cette réaction, on peut préciser que le composé de formule (11) à fonction thiol peut être obtenu en deux étapes, à savoir :
Etape 1 = réaction en présence de thiourée en masse à température ambiante,
Etape 2 = réaction de l'intermédiaire obtenu à l'étape 1 avec NH₃ gaz sous pression autogène à 100°C ou réaction avec un alcoxyde de métal alcalin.

L'agent nucléophile peut être un nitrile. Dans ce cas, lorsque m = 1, le schéma réactionnel est le suivant : 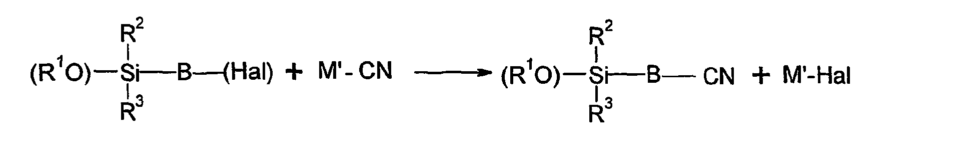 avec M' choisi parmi les métaux alcalins.

A propos de cette réaction, on peut préciser que ce composé à fonction cyano peut être obtenu par réaction de l'halogénosilane avec un cyanure alcalin ; par exemple dans des conditions similaires à celles décrites dans le Brevet Union Carbide US-3 177 236 (1965), à savoir : NaCN anhydre dans du diméthylformamide, 6 heures à 150°C.

Le composé de formule (11) obtenu peut lui-même être réduit dans des conditions connues pour donner :

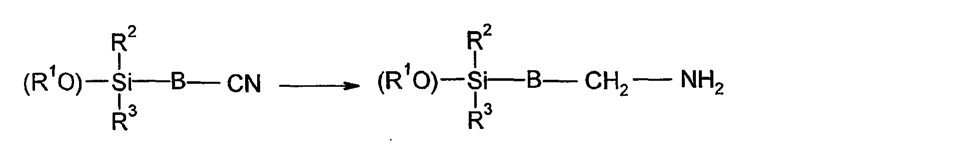

L'agent nucléophile peut être un thio ou un oxynitrile. Dans ce cas, le schéma réactionnel est le suivant : 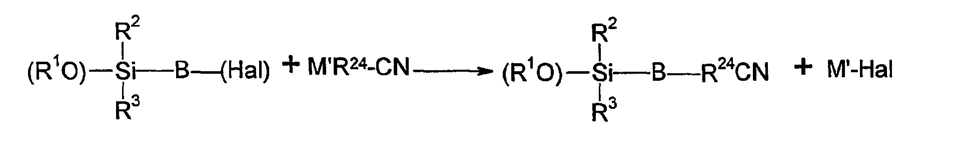 avec M' choisi parmi les métaux alcalins et R²⁴ = O ou S.

L'agent nucléophile peut être M'₂Sₓ. Dans ce cas, lorsque m = 1, le schéma réactionnel est le suivant : 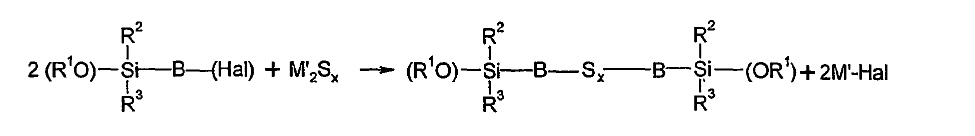
- avec M' = métaux alcalins,
- x = nombre entier ou fractionnaire allant de 1,5 à 10 et de préférence de 2 à 5.

Dans le cas où W est un radical du type (organoxysilyl)organopolythio, la réaction en cause est une sulfuration. Cela consiste à faire réagir le monoorganoxysilane halogéné (I) obtenu par le procédé selon l'invention, avec un polysulfure métallique anhydre de formule M'₂ Sₓ en opérant à une température allant de - 20°C à 90°C, en présence éventuellement d'un solvant organique polaire (ou non polaire) inerte.

En ce qui concerne la manière pratique de mettre en oeuvre la synthèse précitée, on se reportera pour plus de détails au contenu par exemple de EP-A-0 848 006 qui illustre, au départ d'autres réactifs, des modes opératoires applicables à la conduite de la synthèse considérée.

Confomément à l'invention, le produit (1) obtenu à l'issue de l'étape -c-, où m = 2, est un intermédiaire de synthèse apte à réagir en particulier avec l'agent nucléophile M'₂Sₓ. Dans ce cas, le schéma réactionnel est le suivant :

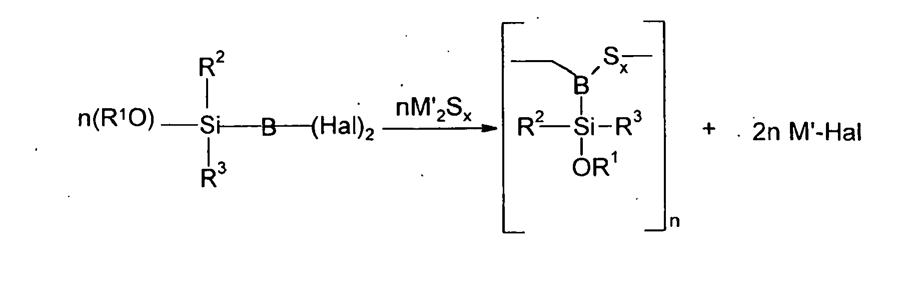

Les procédés selon l'invention s'appliquent, par exemple, à la préparation des monoorganoxysilanes halogénés de formules :

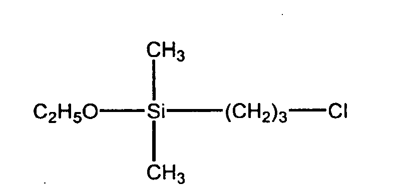

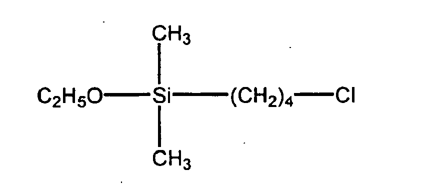

Les exemples suivants illustrent la présente invention.

### Exemples:

### Exemple 1

Le schéma réactionnel concerné par cet exemple est le suivant :

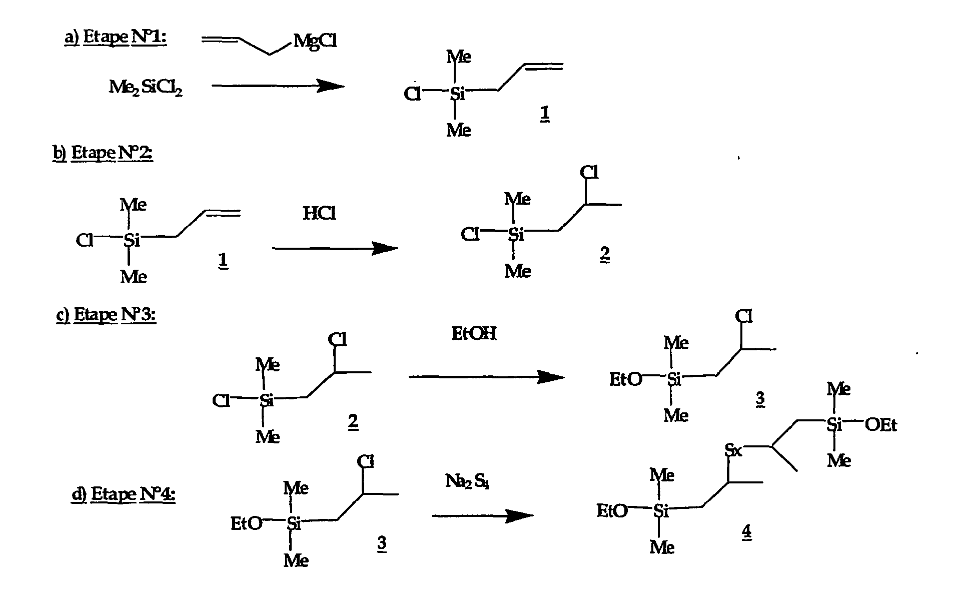

### Etape a) : Synthèse de 1 :

Dans un réacteur de 1l sous azote on introduit 300ml de THF sec et 129g (1 mole) de Me₂SiCl₂. On refroidi à 0°C et on rajoute goutte à goutte mole d'allyle choro Grignard en solution dans le THF. On laisse revenir à 25°C et on laisse réagir 16h. On évapore ensuite le solvant et les légers. On reprend la masse rationnelle avec de l'hexane sec. On filtre. On lave le gâteau avec de l'hexane sec. Par distillation on récupère 1 avec un rendement isolé de l'ordre de 80°C. Les analyses structures confirment la structure de 1. Teb : 110-112°C / 755 mm d'Hg (Litt : 110°C / 753 mm d'Hg).
Mode opératoire idem pour ClMe₂Si-CH₂-CMe=CH₂ :150-152°C /755 mm d'Hg (Litt. 133-134/741 mm d'Hg).

### Etape b) d'hydrochloration : Mode opératoire général

Dans un réacteur de 1litre sous azote, on introduit 0,5 mole de silane allylé ou méthalylé et 0,006 mole de FeCl₃ et 200ml de toluène. Sous forte agitation on rajoute du HCl gaz avec un débit de 4 lite/h La température montre vers 50-70°C. La quantité d'HCl introduit correspond à la stoechiométrie par rapport à l'insaturation. On laisse refroidir et on évapore le solvant. Les silanes chlorés sont récupérés par distillation sous vide.

### Etape c) Ethoxylation :

Dans un réacteur de 2 litres sous azote, on introduit 513g (3 moles) du silane de structure 2 et 300ml de toluène. On rajoute lentement 200g d'éthanol sec. La température est maintenue vers 50°C. Durant cette opération l'HCl est strippé avec de l'azote. On rajoute à la suite du NaHCO₃ afin de neutraliser les dernières traces de HCl restantes. On filtre et on évapore ensuite le solvant. On récupère 541 g du dérivé 3 avec un rendement quasi quantitatif.

### Utilisation de l'alcoxysilane halogéné 3, en tant qu'intermédiaire de synthèse dans une réaction de sulfuration :

Dans un réacteur de 1litre double enveloppe qui est équipé d'un réfrigérant, d'une agitation mécanique (turbine de rushton), d'un thermocouple, d'un tuyau d'admission de gaz (argon ou H₂S) et d'une arrivée pour la pompe péristaltique, 91,9g d'éthanolate de sodium (1,352 mole, soit l'équivalent de 2 moles pour une mole de H₂S) en solution à 21% massique dans l'éthanol (438g) et 250ml de toluène sont introduits en pied sous courant d'argon.

L'ensemble est placé sous agitation (200-300 tours /min). Une masse de 65g de soufre (2,031 moles, soit l'équivalent de 3 moles pour une mole de H₂S) est alors additionnée.

Après une purge des circuits à l'argon, l'H₂S (23g, soit 0,676 mole) est introduit par bullage au moyen d'un tube plongeant, soit pendant 45-60min. On chauffe à 60°C durant 1 h de manière à compléter le conversion en Na₂S₄ anhydre.

On laisse refroidir à 25°C. Une masse de 244 g (1,352 mole) de 3 est ajoutée au moyen d'une pompe péristaltique en 30min (débit : 10 ml / min).

La masse réactionnelle est chauffée à 75°C durant 4h. On laisse ensuite refroidir. On filtre. Le gâteau est lavé deux fois avec du toluène sec. On évapore sous vide pompe (3-4.10² Pa) à 70°C. On récupère 275g du dérivé 4. Les analyses RMN confirment la structure du produit. Le nombre moyen d'atome de soufre (x) est de 3,9 ± 0,1.

### Exemple 2

Le schéma réactionnel concerné par cet exemple est le suivant :

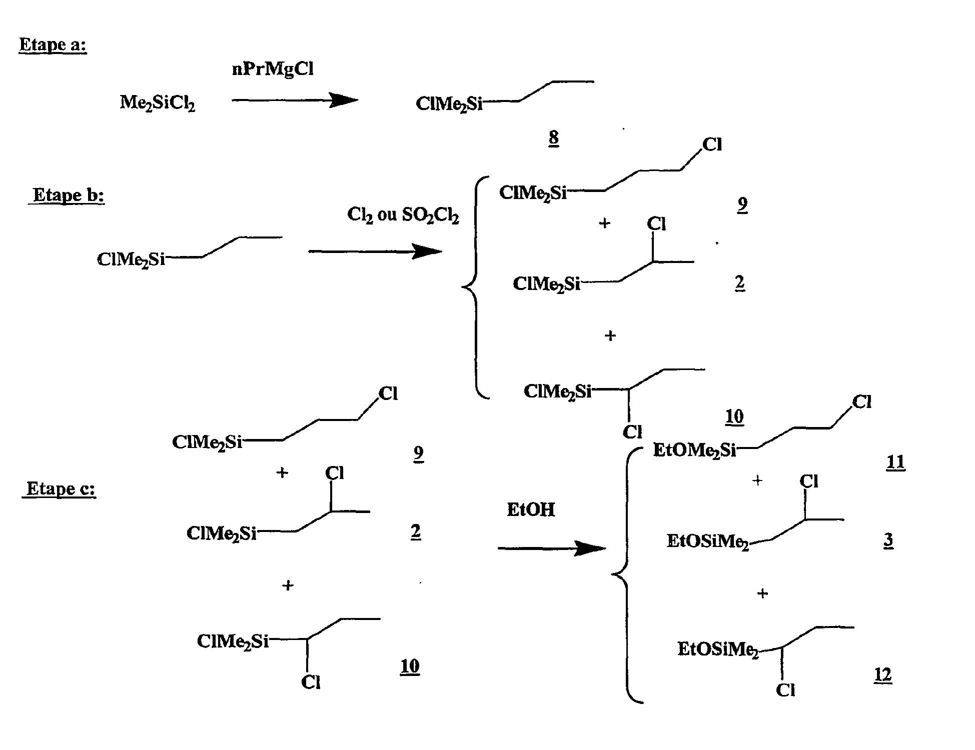

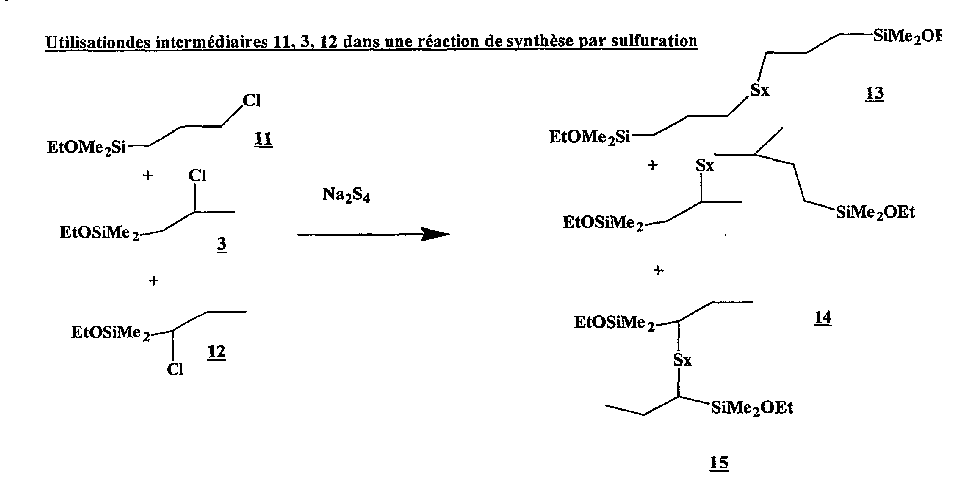

### Etape a) : Synthèse de 8 :

Dans un réacteur de 500ml sec et sous argon, on introduit 60g (2,5 mole), de Mg en copeaux et 100ml de THF anhydre. On rajoute ensuite goutte à goutte 61g (0,5 mole) de1-bromopropane dans 100ml de THF anhydre. La réaction est exothermique (→ reflux). Cette solution est ensuite refroidie à 25°C.

Dans un second réacteur 500ml sec et sous argon, on introduit 193,5g (1,5 mole) de Me₂SiCl₂ et on coule lentement la première solution. On laisse à reflux durant 24h. O n laisse refroidir et on filtre sous argon. On effectue une distillation rapide sous vide et ensuite une rectification sous vide permet de récupérer 55g de n-PrSiMe₂Cl avec un rendement isolé de 80%.

Les analyses RMN confirment la structure chimique de ce dérivé. T ébul/ 112-1130°C /730 mm d'Hg (Lit/ 100-110°C / 720 mm d'Hg - L.BOKSANYI et Coll., Helv.Chim.Acta. (74) (1976) 717)).

### Etape b) d'hydrochloration : Mode opératoire général

Le procédé de chloration est décrit dans la littérature. Par exemple : L.SOMMER et Coll., J.Am.Chem.Soc., 68 (1946) 488 et V.MIRONOV et Coll., Izv.Akakd.Nauk.SSSR., Otdel. Khim. Nauk., (1955) 182.

On obtient en général un mélange des trois composés dans un rapport qui dépend de la nature de l'agent chlorant. Pour SO₂Cl₂, on observe les rapports suivants : ∼5 / ∼45 / ∼50 entre **10**/**2**/**9**.

L'utilisation du chlore permet de réduire très fortement le taux de dérivé **10**. Les rendements isolés sont de l'ordre de 75-80%.

### Chloration du n-PrSiMe₂Cl

Dans un réacteur de 500 ml sous azote, on introduit de 136,5g (1 mole) de n-PrSiMe₂Cl dans 200ml de CCl₄. On porte à reflux et on rajoute goutte à goutte une solution de chlorure de sulfuryle (180g , 1,33 mole) dans 100ml de CCl₄ et 2g de péroxyde de benzoyle. On laisse réagir 2h. On évapore le solvant. Une rectification sous vide permet de récupérer 110g du mélange des trois dérivés suivants avec un rapport molaire 5 / 45 / 50 pour les positions de chloration en α, β et γ.

### Etape c) Ethoxylation:

Dans un réacteur de 21 sous azote, on introduit 513g (3 moles) du mélange de silanes de **9**, **2**, **10** et 300ml de toluène sec. On rajoute lentement 200g d'éthanol sec. La température est maintenue vers 50°C. Durant cette opération l'HCl est strippé avec de l'azote. On rajoute à la suite du NaHCO₃ afin de neutraliser les dernières traces de HCl restantes. On filtre et on évapore ensuite le solvant. On récupère 273g du mélange de dérivés **11, 3, 12** avec un rendement quasi quantitatif.

### Utilisation des alcoxysilanes halogénés 11, 3, 12, en tant qu'intermédiaires de synthèse dans des réactions de sulfuration :

Dans un réacteur de 1litre double enveloppe qui est équipé d'un réfrigérant, d'une agitation mécanique (turbine de rushton), d'un thermocouple, d'un tuyau d'admission de gaz (argon ou H₂S) et d'une arrivée pour la pompe péristaltique, 91,9g d'éthanolate de sodium (1,352 mole, soit l'équivalent de 2 mole pour une mole de H₂S) en solution à 21% massique dans l'éthanol (438g) et 250ml de toluène sont introduits en pied sous courant d'argon.

L'ensemble est placé sous agitation (200-300 tours /min). Une masse de 65g de soufre (2,031 moles, soit l'équivalent de 3 moles pour une mole de H₂S) est alors additionnée.

Après une purge des circuits à l'argon, l'H₂S (23g, soit 0,676 mole) est introduit par bullage au moyen d'un tube plongeant, soit pendant 45-60mn. On chauffe à 60°C durant 1 h de manière à compléter le conversion en Na₂S₄ anhydre.

On laisse refroidir à 25°C. Une masse de 244g (1,352 mole) du mélange de dérivés **11, 3** et **12** est ajoutée au moyen d'une pompe péristaltique en 30min (débit : 10 ml / min).

La masse réactionnelle est chauffée à 75°C durant 4h. On laisse ensuite refroidir. On filtre. Le gâteau est lavé deux fois avec du toluène sec. On évapore sous vide pompe (3-4.10² Pa) à 70°C.On récupère 279 g du mélange de dérivés **13, 14** et **15**. Les analyses RMN confirment la structure du produit. Le nombre moyen d'atome de soufre (x) est de 3,8 ±0,1.

## Revendications

1. Procédé de préparation de monoorganoxysilanes -halogénés, de formule : 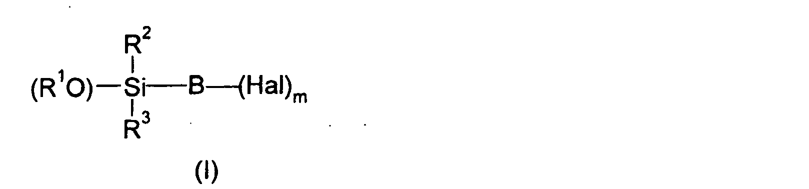 dans laquelle :
• le symbole R¹ représente un groupe hydrocarboné monovalent choisi parmi un radical alkyle, linéaire ou ramifié, ayant de 1 à 4 atomes de carbone et un radical alkoxyalkyle, linéaire ou ramifié, ayant de 2 à 8 atomes de carbone ;
• les symboles R² et R³, identiques ou différents, représentent chacun un groupe un radical alkyle linéaire ou ramifié, ayant de 1 à 6 atomes de carbone, un radical aryle ayant de 6 à 18 atomes de carbone; un radical arylalkyle ou un radical alkylaryle (aryle en C₆-C₁₈; alkyle en C₁-C₆);
• m = 1 ou 2;
• le symbole Hal représente un atome d'halogène choisi parmi les atomes de chlore, brome et iode
• B:
◆ quand m= 1 : reste divalent de formule :
-B¹-CR⁴H-CR⁵R⁶- ; 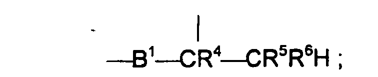
-(B²)ₐ-CR⁷R⁸-CR⁹R¹⁰-CR¹¹R¹²R¹³ ;
avec :
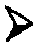 la condition selon laquelle un des radicaux R⁷R⁸R⁹R¹⁰R¹¹R¹²R¹³ correspondant à un lien valenciel ;
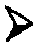 B¹ = reste alkylène, linéaire ou ramifié, en C₁-C₁₀ ; reste aromatique divalent choisi parmi :
□ -phénylène(ortho, méta ou para)-alkylène(linéaire ou ramifié en C₂-C₆)-,
□ -alkylène(linéaire ou ramifié en C₂-C₆)-phénylène(ortho, méta ou para)-, et
□ -alkylène(linéaire ou ramifié en C₂-C₆)-phénylène(ortho, méta ou para) - alkylène(linéaire ou ramifié en C₂-C₆)-,
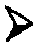 B² = reste alkylène, linéaire ou ramifié, en C₁-C₁₀; reste aromatique divalent choisi parmi :
□ -phénylène(ortho, méta ou para)-alkylène(linéaire ou ramifié en C₂-C₆)-,
□ -alkylène(linéaire ou ramifié en C₂-C₆)-phénylène(ortho, méta ou para)-, et
□ -alkylène(linéaire ou ramifié en C₂-C₆)-phénylène(ortho, méta ou para)-alkylène(linéaire ou ramifié en C₂-C₆)-
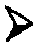 a=0 ou 1;
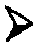 R⁴ à R¹³, identiques ou différents, représentant chacun l'hydrogène, un groupe un radical alkyle linéaire ou ramifié, ayant de 1 à 3 atomes de carbone,
◆ quand m= 2 : reste trivalent de formule : 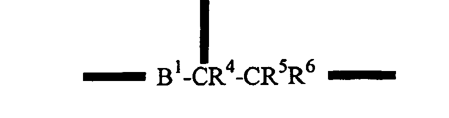 avec B¹, R⁴, R⁵, R⁶ tels que définis ci-dessus ;
**caractérisé en ce qu'**il comprend les étapes suivantes -a-, -b- et -c- :
- Etape -a- 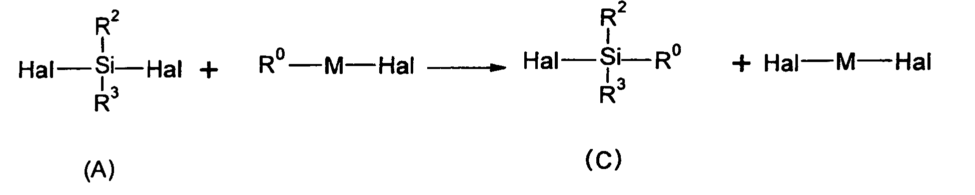 avec :
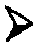 R° représentant indépendamment :
• R⁰¹ correspondant à : CR⁵R⁶=CR⁴-B¹-;
• R⁰² correspondant à : CR¹¹R¹²R¹³-CR⁹R¹⁰-CR⁷R⁸-(B²)ₐ- ; avec au moins un des radicaux R⁷ à R¹³ représentant l'hydrogène ;
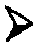 le symbole M représentant un métal alcalino-terreux ;
- Etape -b-
quand R⁰= R⁰¹:
O soit : 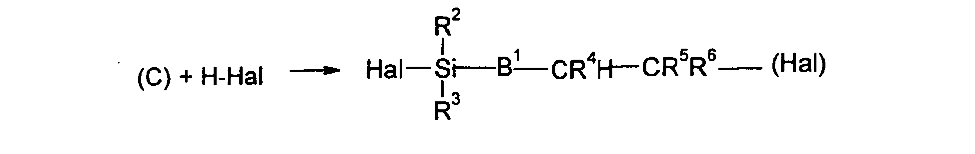 et/ou 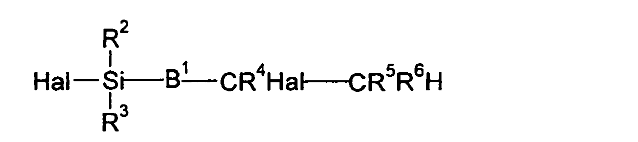 les produits ainsi obtenus, quand ils sont en mélange pouvant être introduits dans l'étape -c-, soit en mélange, soit isolément après séparation ;
O soit : 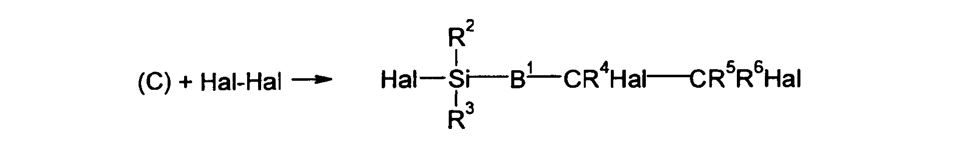
Quand R⁰ = R⁰² 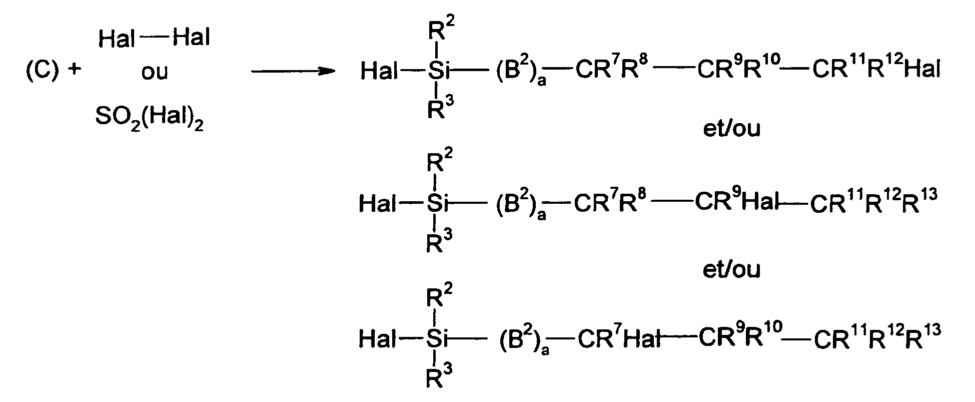 (dans le cas où R¹³ et/ou R¹⁰ et/ou R⁸ = H)
les produits ainsi obtenus, quand ils sont en mélange pouvant être introduits dans l'étape -c-, soit en mélange, soit isolément après séparation ;
- Etape -c-

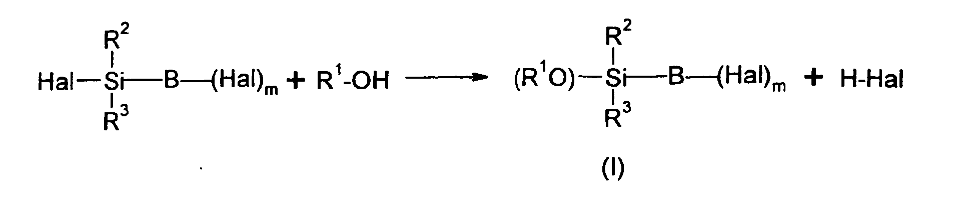

2. **-** Procédé selon la revendication 1, **caractérisé en ce que** le symbole Hal représente un atome de chlore.

3. - Procédé selon la revendication 1, **caractérisé en ce que** :
- R⁰=R⁰¹,
- et l'étape -b- est la suivante : 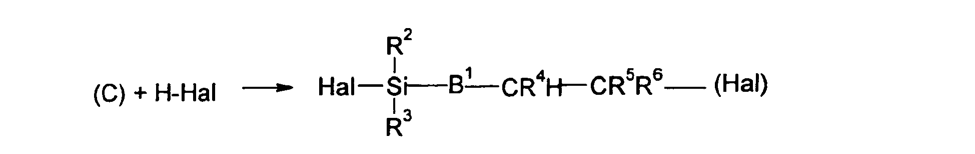 et/ou

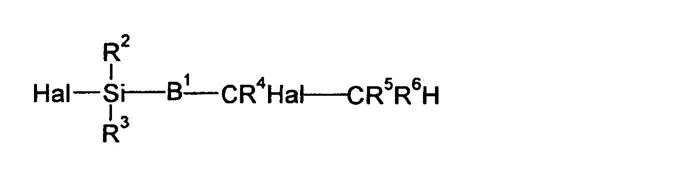

4. - Procédé selon l'une quelconque des revendications précédentes, **caractérisé en ce que**, dans la conduite des étapes -a-, -b- et -c-, on remplace les deux étapes -a- et -b- où m = 1, par l'étape unique -a'- ou -a"- suivante :
- Etape -a'- : 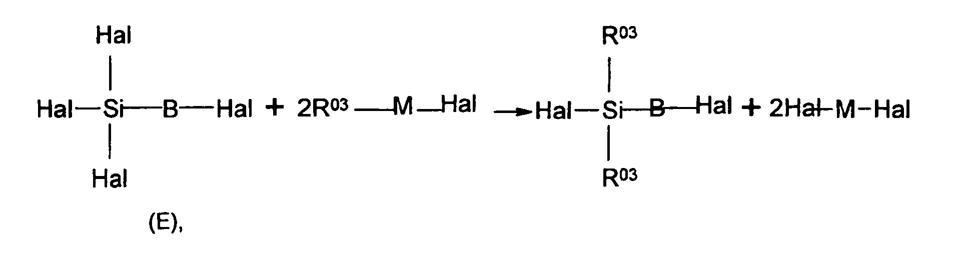
- Etape -a" - 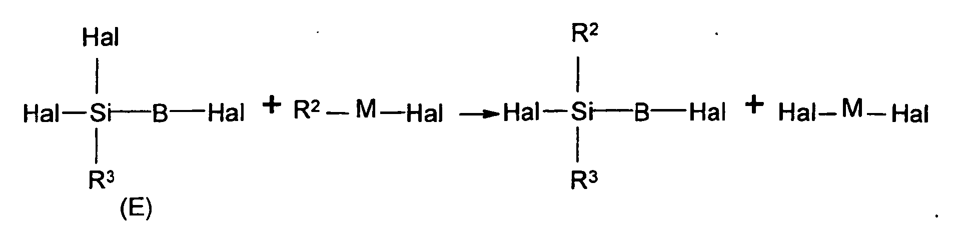 où les symboles Hal, B et M sont tels que définis supra, le symbole R⁰³ correspond à R² et/ou R³ tels que définis également supra.

5. - Procédé selon la revendication 1 ou 2, **caractérisé en ce que** l'on remplace les trois étapes -a-, -b-, et -c- où m = 1 par les trois étapes -a1-, -b1-, et -c1- suivantes :
- Etape -a1- 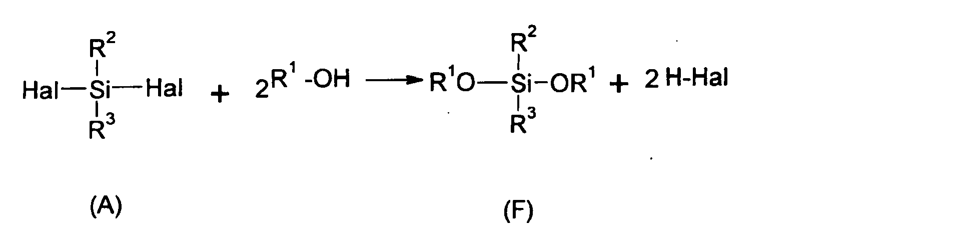 où les symboles Hal, R², R³ et R¹ sont tels que définis supra,
- Etape-b1- 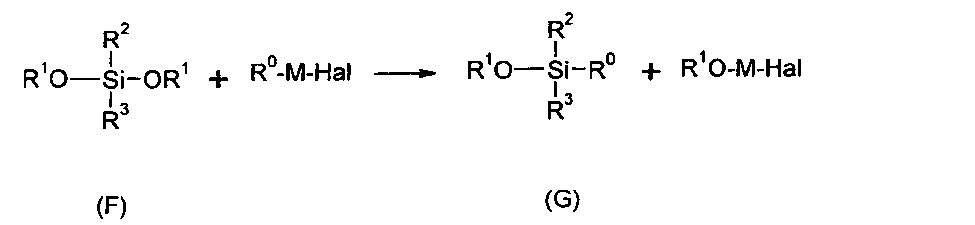 où les symboles R¹, R², R³, R° = R⁰¹ ou R⁰², M et Hal sont tels que définis supra,
- Etape -c1- au cours de laquelle on procède soit à l'hydrohalogénation du groupement R° = R⁰¹ de la formule (G), soit à l'halogénation du groupement R°= R⁰² de la formule (G) pour conduire au groupement B-Hal, qui est effectuée à l'aide soit du réactif H-Hal, soit des réactifs Hal-Hal et/ou SO₂(Hal)₂ comme indiqué supra dans l'étape -b- de la revendication 1.

6. - Procédé selon la revendication 5, **caractérisé en ce que** l'on remplace les trois étapes -a1-, -b1- et -c1- où m = 1, par l'étape unique -a"'- suivante :
Etape -a"'- 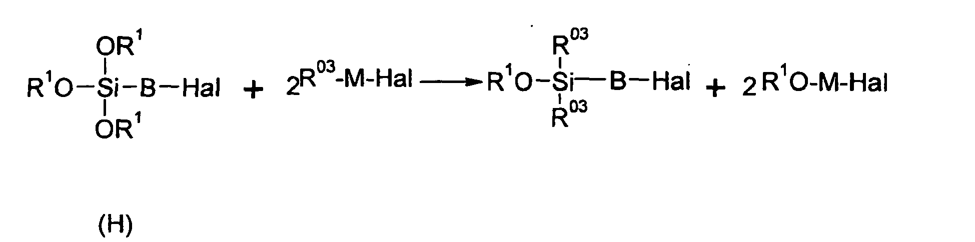 où les symboles R¹, B, Hal, R⁰³ et M sont tels que définis supra.

## Claims

1. A process for preparing halogenated monoorganoxysilanes of formula: 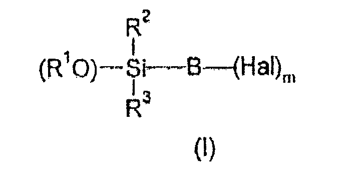 in which:
• the symbol R¹ represents a monovalent hydrocarbonaceous group chosen from a linear or branched alkyl radical having from 1 to 4 carbon atoms and a linear or branched alkoxyalkyl radical having from 2 to 8 carbon atoms;
• the symbols R² and R³, which may be identical or different, each represent a group a linear or branched alkyl radical having from 1 to 6 carbon atoms, an aryl radical having from 6 to 18 carbon atoms; an arylalkyl radical or an alkylaryl radical (C₆-C₁₈ aryl; C₁-C₆ alkyl) ;
• m = 1 or 2;
• the symbol Hal represents a halogen atom chosen from chlorine, bromine and iodine atoms;
• B:
◆ when m = 1: divalent residue of formula:
-B¹-CR⁴H-CR⁵R⁶- ; 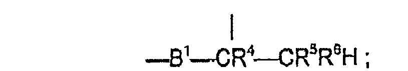
-(B²)ₐ-CR⁷R⁸-CR⁹R¹⁰-CR¹¹R¹²R¹³;
with:
the condition according to which one of the radicals R⁷ , R⁸ , R⁹ , R¹⁰ , R¹¹, R¹² , R¹³ corresponds to a valency bond;
B¹ = linear or branched C₁-C₁₀ alkylene residue; divalent aromatic residue chosen from:
□ - (ortho-, meta- or para-)phenylene-(linear or branched C₂-C₆)alkylene-,
□ - (linear or branched C₂-C₆) alkylene-(ortho-, meta- or para-)phenylene-, and
□ - (linear or branched C₂-C₆) alkylene-(ortho-, meta- or para-)phenylene-(linear or branched C₂-C₆)alkylene-
B² = linear or branched C₁-C₁₀ alkylene residue; divalent aromatic residue chosen from:
□ -(ortho-, meta- or para-)phenylene-(linear or branched C₂-C₆)alkylene-,
□ -(linear or branched C₂-C₆)alkylene-(ortho-, meta- or para-)phenylene-, and
□ -(linear or branched C₂-C₆)alkylene-(ortho-, meta- or para-)phenylene-(linear or branched C₂-C₆)alkylene-
a = 0 or 1;
R⁴ to R¹³, which may be identical or different, each represent hydrogen, or a group a linear or branched alkyl radical having from 1 to 3 carbon atoms,
◆ when m = 2: trivalent residue of formula: 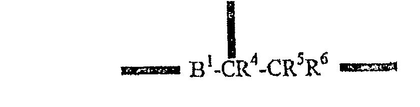 with B¹, R⁴, R⁵, R⁶ as defined above;
**characterized in that** it comprises the following steps -a-, -b- and -c-:
- Step -a- 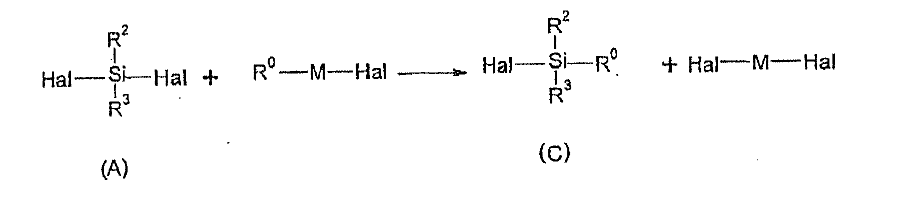 with:
R⁰ representing independently:
• R⁰¹ corresponding to: CR⁵R⁶=CR⁴-B¹-;
• R⁰² corresponding to:
CR¹¹R¹²R¹³-CR⁹R¹⁰-CR⁷R⁶-(B²)ₐ-; with at least one of the radicals R⁷ to R¹³ representing hydrogen;
the symbol M representing an alkaline earth metal;
- Step -b-
when R⁰ = R⁰¹:
O either: 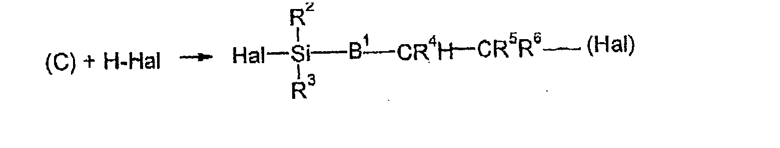 and/or 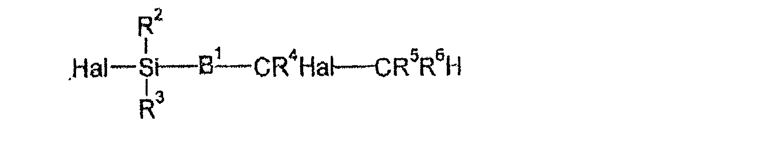 it being possible for the products thus obtained, when they are in a mixture, to be introduced in step -c-, either as a mixture, or separately after separation;
O or: 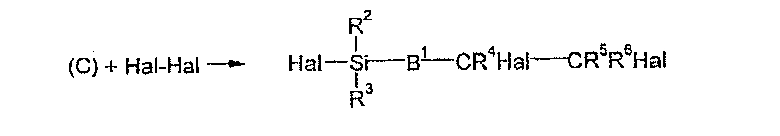
when R⁰ = R⁰² 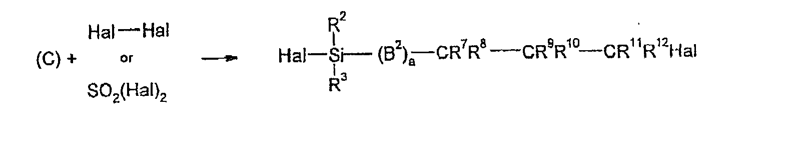 and/or 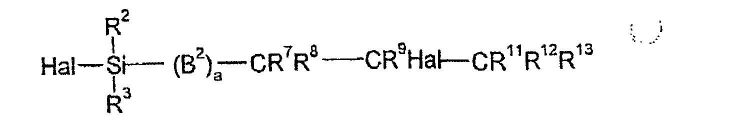 and/or 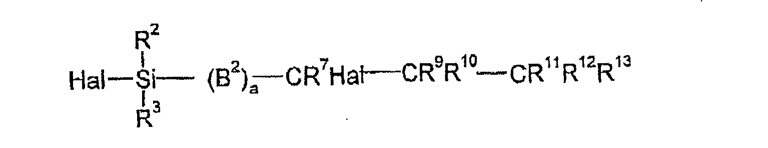 (in the case where R¹³ and/or R¹⁰ and/or R⁸ = H) it being possible for the products thus obtained, when they are in a mixture, to be introduced in step -c-, either as a mixture, or separately after separation;
- Step -c-

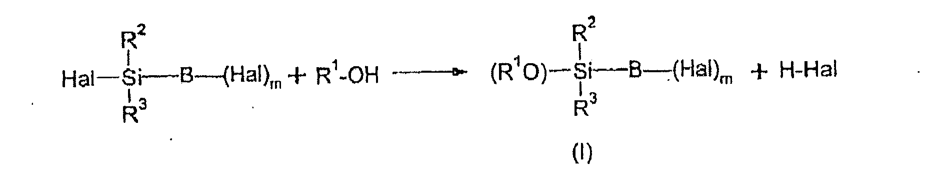

2. The process as claimed in claim 1, **characterized in that** the symbol Hal represents a chlorine atom.

3. The process as claimed in claim 1, **characterized in that**:
- R⁰ = R⁰¹,
- and step -b- is as follows: 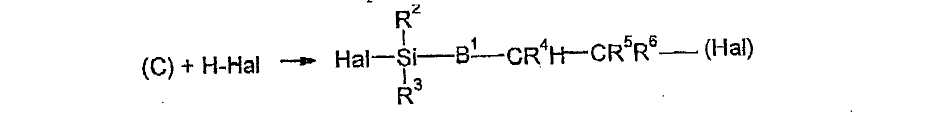 and/or

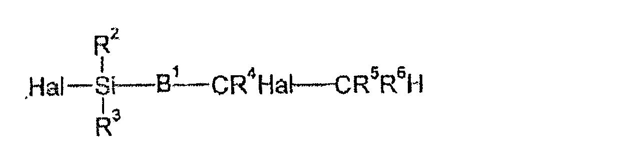

4. The process as claimed in any one of the preceding claims, **characterized in that**, in carrying out steps -a-, -b- and -c-, the two steps -a- and -b-where m = 1 are replaced with the single step -a'- or -a"- below:
- Step -a'- 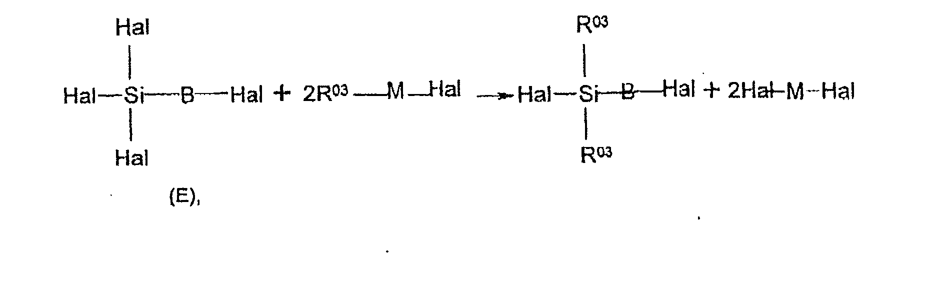
- Step -a"- 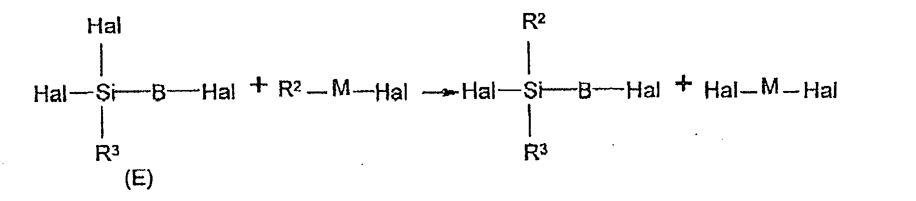 where the symbols Hal, B and M are as defined above, and the symbol R⁰³ corresponds to R² and/or R³ as also defined above.

5. The process as claimed in claim 1 or 2, **characterized in that** the three steps -a-, -b- and -c-where m = 1 are replaced with the three steps -a1-, -b1- and -c1- below:
- Step -a1- 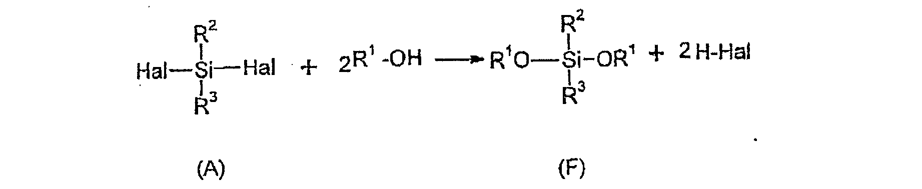 where the symbols Hal, R², R³ and R¹ are as defined above,
- Step -b1- 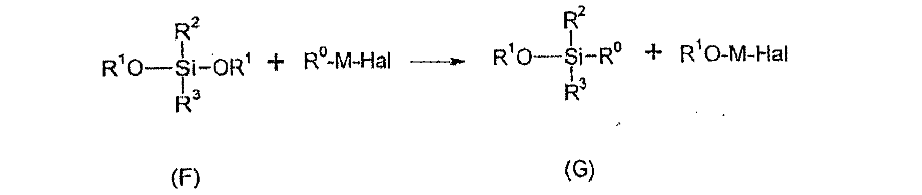 where the symbols R¹, R², R³, R⁰ = R⁰¹ or R⁰², M and Hal are as defined above,
- Step -c1-, during which either the group R⁰ = R⁰¹ of formula (G) is hydrohalogenated, or the group R⁰ = R⁰² of formula (G) is halogenated, so as to produce the group B-Hal, this being carried out using either the reagent H-Hal or the reagents Hal-Hal and/or SO₂(Hal)₂ as indicated above in step -b- of claim 1.

6. The process as claimed in claim 5, **characterized in that** the three steps -a1-, -b1- and -c1- where m = 1 are replaced with the single step -a"'- below:
- Step - a"'- 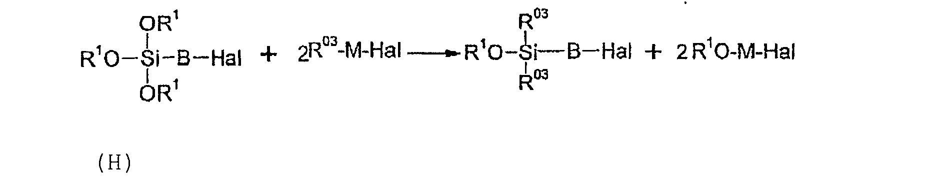 where the symbols R¹, B, Hal, R⁰³ and M are as defined above.

## Patentansprüche

1. Verfahren der Herstellung halogenierter Monoorganoxysilane der Formel: 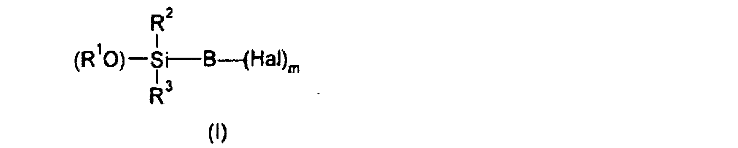 worin:
- das Symbol R¹ eine monovalente Kohlenwasserstoffgruppe darstellt, die ausgewählt ist aus einem linearen oder verzweigten Alkylradikal, das 1 bis 4 Kohlenstoffatome aufweist, und einem linearen oder verzweigten Alkoxyalkylradikal, das 2 bis 8 Kohlenstoffatome aufweist;
- die Symbole R² und R³, die gleich oder verschieden voneinander sind, jeweils eine lineare oder verzweigte Alkylradikalgruppe, die 1 bis 6 Kohlenstoffatome aufweist, ein Arylradikal, das 6 bis 18 Kohlenstoffatome aufweist, ein Arylalkylradikal oder ein Alkylarylradikal (Aryl von C₆-C₁₈; Alkyl von C₁-C₆) darstellen;
- m = 1 oder 2;
- das Symbol Hal ein Halogenatom darstellt, das ausgewählt ist aus Chlor-, Brom- und Jodatomen
- B:
◆ wenn m = 1: divalenter Rest der Formel:
-B¹-CR⁴H-CR⁵R⁶-; 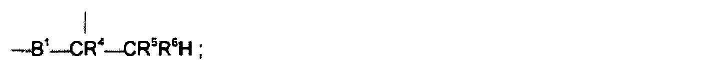
-(B²)ₐ-CR⁷R⁸-CR⁹R¹⁰-CR¹¹R¹²R¹³;
mit:
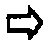 einer Bedingung gemäß der eines der Radikale R⁷, R⁸, R⁹, R¹⁰, R¹¹, R¹², R¹³ einer Valenzbindung entspricht;
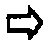 B¹ = linearer oder verzweigter Alkylenrest von C₁-C₁₀; divalenter aromatischer Rest, ausgewählt aus:
□ - Phenylen (ortho, meta oder para) - alkylen (linear oder verzweigt von C₂-C₆) -,
□ - Alkylen (linear oder verzweigt von C₂-C₆) - phenylen (ortho, meta oder para) -, und
□ - Alkylen (linear oder verzweigt von C₂-C₆) - phenylen (ortho, meta oder para) - alkylen (linear oder verzweigt von C₂-C₆)-,
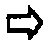 B² = linearer oder verzweigter Alkylenrest von C₁-C₁₀; divalenter aromatischer Rest, ausgewählt aus:
□ Phenylen (ortho, meta oder para) - alkylen (linear oder verzweigt von C₂-C₆) -,
□ - Alkylen (linear oder verzweigt von C₂-C₆) - phenylen (ortho, meta oder para) -, und
□ Alkylen (linear oder verzweigt von C₂-C₆)- phenylen (ortho, meta oder para) - alkylen (linear oder verzweigt von C₂-C₆)-,
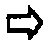 a = 0 oder 1;
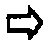 R⁴ bis R¹³, die gleich oder verschieden voneinander sind, jeweils Wasserstoff, bzw. eine lineare oder verzweigte Alkylradikalgruppe, die 1 bis 3 Kohlenstoffatome aufweist, darstellen,
◆ wenn m = 2: trivalenter Rest der Formel: 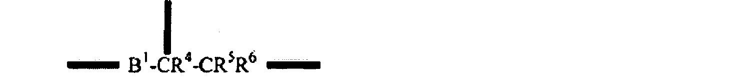 mit B¹, R⁴, R⁵, R⁶ wie oben definiert sind;
**dadurch gekennzeichnet, dass** es die folgenden Schritte -a-, -b- und -c- umfasst:
- Schritt -a- 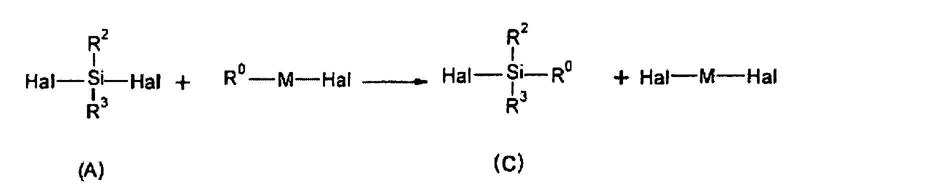 mit:
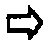 R⁰ stellt unabhängig dar:
• R⁰¹, der CR⁵R⁶=CR⁴-B¹- entspricht
• R⁰², der CR¹¹R¹²R¹³-CR⁹R¹⁰-CR⁷R⁸-(B²)ₐ- entspricht wobei mindestens eines der Radikale R⁷ bis R¹³ Wasserstoff darstellt;
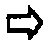 das Symbol M stellt ein Erdalkalimetall dar;
- Schritt -b-
wenn R⁰ = R⁰¹:
O entweder: 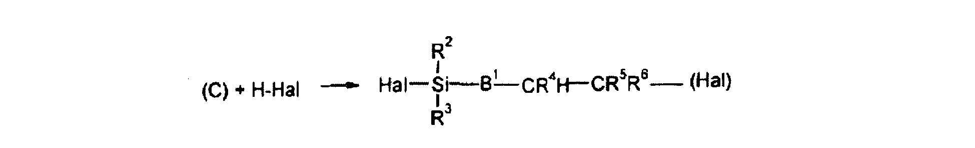 und/oder 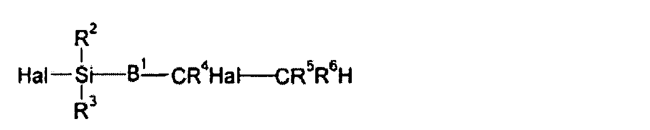 die so erhaltenen Produkte können, wenn sie als Gemisch vorliegen, in den Schritt -c- entweder als Gemisch oder nach Auftrennung einzeln zugesetzt werden;
O oder: 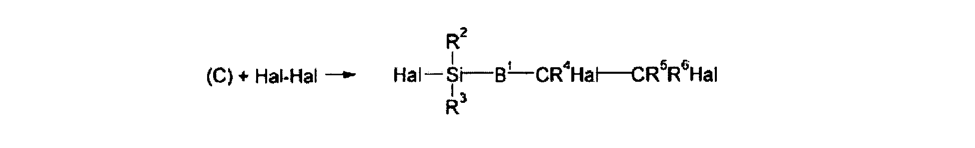
wenn R⁰ = R⁰² 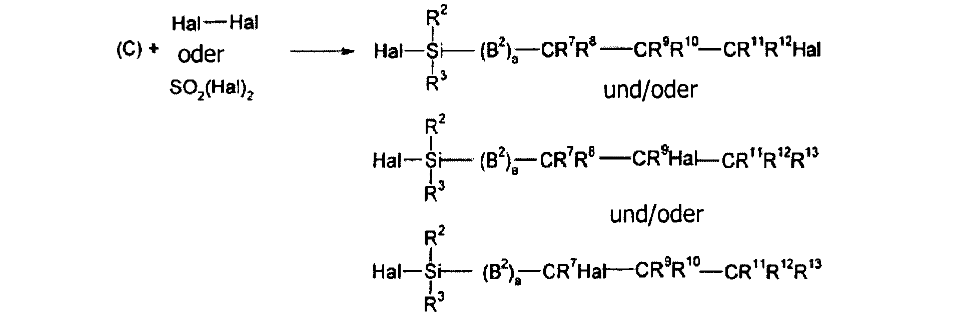 (im Fall dass R¹³ und/oder R¹⁰ und/oder R⁸ = H)
die so erhaltenen Produkte können, wenn sie als Gemisch vorliegen, in den Schritt -c- entweder als Gemisch oder nach Auftrennung einzeln zugeführt werden;
- Schritt -c-

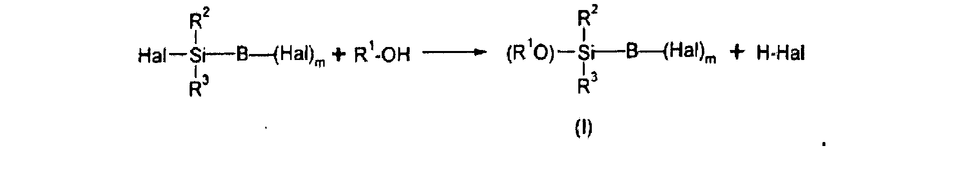

2. Verfahren gemäß Anspruch 1, **dadurch gekennzeichnet, dass** das Symbol Hal ein Chloratom darstellt.

3. Verfahren gemäß Anspruch 1, **dadurch gekennzeichnet, dass**:
- R⁰ = R⁰¹,
- und der Schritt -b- wie folgt ist: 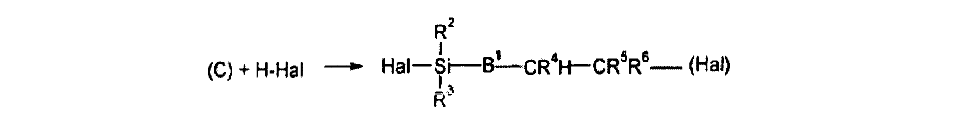 und/oder

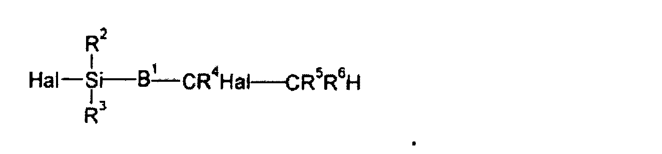

4. Verfahren gemäß einem der vorhergehenden Ansprüche, **dadurch gekennzeichnet, dass** bei der Durchführung der Schritte -a-, -b- und -c- die beiden Schritte -a- und -b-, wobei m = 1, durch einen alleinigen Schritt -a'- oder -a"- wie folgt ersetzt werden:
- Schritt -a'- 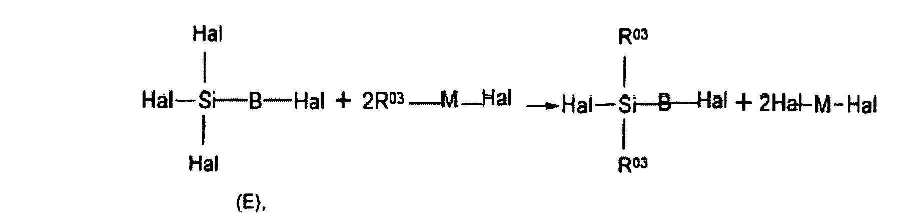
- Schritt -a"- 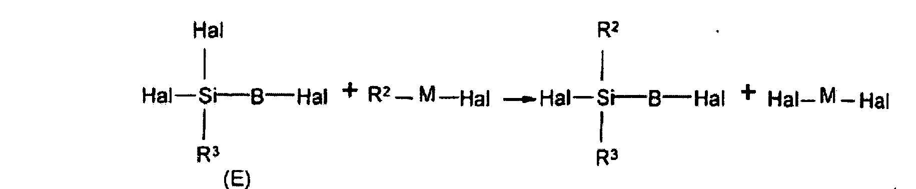 wobei die Symbole Hal, B und M wie zuvor definiert sind, das Symbol R⁰³ R² und/oder R³ entspricht, wie sie ebenfalls zuvor definiert sind.

5. Verfahren gemäß einem der Ansprüche 1 oder 2, **dadurch gekennzeichnet, dass** die drei Schritte -a-, -b- und -c-, wobei m = 1, durch die drei Schritte -a1-, -b1- und -c1- wie folgt ersetzt werden:
- Schritt -a1- 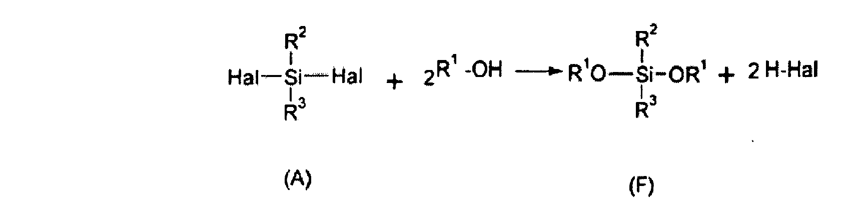 wobei die Symbole Hal, R², R³ und R¹ wie zuvor definiert sind,
- Schritt-b1- 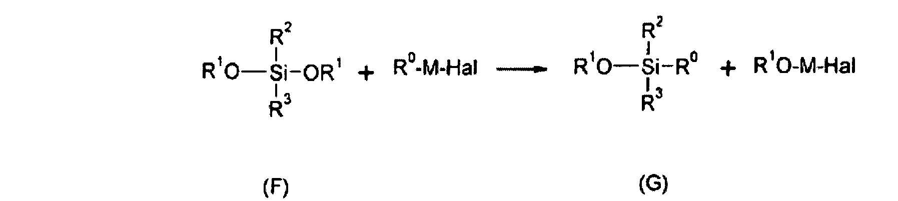 wobei die Symbole R¹, R², R³, R° = R⁰¹ oder R⁰², M und Hal wie zuvor definiert sind,
- Schritt -c1-, in dessen Verlauf es entweder zur Hydrohalogenierung der Gruppierung R⁰ = R⁰¹ der Formel (G) oder zur Halogenierung der Gruppierung R⁰ = R⁰² der Formel (G) kommt, um zur Gruppierung B-Hal zu gelangen, was entweder mit Hilfe des Reagenz H-Hal oder der Reagenzien Hal-Hal und/oder SO₂(Hal)₂ wie zuvor im Schritt -b- von Anspruch 1 angegeben bewirkt wird.

6. Verfahren gemäß Anspruch 5, **dadurch gekennzeichnet, dass** die drei Schritte -a1-, -b1- und -c1-, wobei m = 1, durch den alleinigen Schritt -a"'- wie folgt ersetzt werden:
Schritt -a"'- 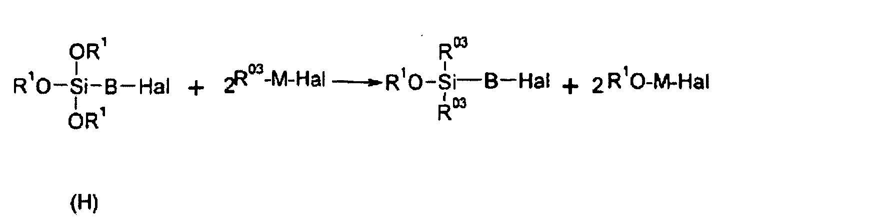 wobei die Symbole R¹, B, Hal, R⁰³ und M wie zuvor definiert sind.
